# EUROPEAN PATENT SPECIFICATION

(11) **EP 3 253 143 B1**
(45) Date of publication and mention of the grant of the patent: **06.01.2021**
(21) Application number: 15879349.7
(22) Date of filing: 28.01.2015
(51) Int. Cl.: H04W 24/00, H04L 1/00, H04W 48/00, H04W 16/14, H04L 5/00

(54) **APPARATUS FOR FEEDING BACK CHANNEL INFORMATION OF UNLICENSED FREQUENCY BAND**
VORRICHTUNG FÜR RÜCKMELDUNG VON KANALINFORMATIONEN EINES UNLIZENZIERTEN FREQUENZBANDES
APPAREIL POUR RENVOYER DES INFORMATIONS DE CANAL D'UNE BANDE DE FRÉQUENCES NON AUTORISÉE

(43) Date of publication of application: 06.12.2017
(73) Proprietor: Fujitsu Ltd., Kawasaki-shi, Kanagawa 211-8588 (JP)
(72) Inventor: ZHOU, Hua, Beijing 100025 (CN); ZHANG, Yi, Beijing 100025 (CN); XU, Haibo, Beijing 100025 (CN)
(74) Representative: Haseltine Lake Kempner LLP
(86) International application number: PCT/CN2015/071700
(87) International publication number: WO 2016/119138

(56) References cited:
- WO-A1-2014/119413
- CN-A- 102 232 307
- CN-A- 103 001 678
- US-A1- 2008 010 208
- US-A1- 2014 036 881
- CATT: "Remaining details on periodic CSI feedback for eIMTA", 3GPP DRAFT; R1-141982, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Seoul, Korea; 20140519 - 20140523 18 May 2014 (2014-05-18), XP050789102, Retrieved from the Internet: URL:http://www.3gpp.org/ftp/Meetings_3GPP_ SYNC/RAN1/RAN1/Docs/ [retrieved on 2014-05-18]
- "3rd Generation Partnership Project; Technical Specification Group Radio Access Network; Evolved Universal Terrestrial Radio Access (E-UTRA); Physical layer procedures (Release 12)", 3GPP STANDARD; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V12.4.0, 7 January 2015 (2015-01-07), pages 1-225, XP050927573, [retrieved on 2015-01-07]

## Description

### Field

This disclosure relates to the field of communication technologies, and in particular to a method and apparatus for feeding back channel information and a communication system using an LTE (long-term evolution) technology at an unlicensed band.

### Background

In recent years, wireless communication technologies have developed rapidly, and 3GPP (the 3rd generation partnership project) standardization has developed to Rel. 12 (Release 12), key technologies of which covering wide configuration of small cells, carrier aggregation, and 3D (three dimensional) multi-antenna technologies (MIMO, multiple-input multiple-output), etc. Even though it has made a breakthrough in many transmission technologies, taking rapid development of mobile traffics at present and in the future and variety of terminal forms and enormousness of numbers of terminal into account, capacities of LTE (long-term evolution) systems based on licensed bands will still be insufficient at present and in the foreseeable future.

On the one hand, the licensed bands are obtained by the operators through bids at the auction from telecommunications markets, which are high in costs. Hence, all levels of participants in the communication industry will guarantee the full use of these licensed bands by making standard protocols. With the development of these years, a tradeoff between the cost and utility has been reached in the communication technologies based on licensed bands.

And on the other hand, there exist large quantities of unlicensed bands out of the licensed bands delimited by the ITU (International Telecommunication Union), which may be arbitrarily used while satisfying conditions of policies. For example, at a band of 2.6 GHz, there exist a large amount of WiFi (wireless fidelity) applications currently, which may be deployed by operators, and may also be deployed by vendors in markets. Taking into account that the large quantities of unlicensed bands are vacant, participants of the LTE industry start to consider how to introduce the LTE technology into these bands.

US2014/036881A1 discloses a method for transmitting control information by a base station in a wireless communication system comprising transmitting a physical downlink control channel (PDCCH) in which the downlink control information may include an indicator indicating whether or not a reference signal is transmitted in a time domain corresponding to the subframe in which the PDCCH is transmitted.

The non-patent document from CATT: "Remaining details on periodic CSI feedback for eIMTA",R1-141982, is a 3GPP contribution disclosing the transmission of an old CSI measurement.

Technical Specification Group Radio Access Network; Evolved Universal Terrestrial Radio Access (E-UTRA); Physical layer procedures (Release 12) is a 3GPP standard describing physical layer procedures, the CQI measuring and reporting procedure in particular.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

It is shown by studies that at these unlicensed bands, the use of the LTE technology will bring a larger system capacity than the use of the WiFi technology, this is because that an LTE system possesses a more flexible physical layer transmission technology and MAC (media access control) layer physical resource allocation technology, as well as more advanced QoS (quality of service) administration in network layer, etc. Based on these conclusions, consideration of how to use the LTE technology at these unlicensed bands has been started in many studies; however, use of the LTE technology at these unlicensed bands must follow an LBT (listen before talk) mechanism used by the WiFi, that is, an access terminal (a station, STD) monitors whether there exist other link data in a link before it prepares for transmitting data on the link. If yes, it will wait for a period of time. And if no, it will transmit data after a period of time of delay.

Thus, on the one hand, as whether the LTE system may occupy downlink resources at an unlicensed band cannot be determined in advance, a CQI (channel quality indicator) measured by UE (user equipment, which is also referred to as terminal equipment, a terminal, or a user) based on existing effective downlink subframes will be extremely inaccurate. And on the other hand, even though the CQI may be measured, latest CQI information cannot be fed back in time as the UE cannot ensure that an uplink resource at the unlicensed band can be occupied.

The present invention is defined in independent claim 1, to which reference should now be made. Optional embodiments are defined in the dependent claims.

An advantage of the embodiments of this disclosure exists in that with the embodiments of this disclosure, errors of CQI measurement and report in using the LTE technology at an unlicensed band may be avoided.

With reference to the following description and drawings, the particular embodiments of this disclosure are disclosed in detail, and the principles of this disclosure and the manners of use are indicated. It should be understood that the scope of the embodiments of this disclosure is not limited thereto. The embodiments of this disclosure contain many alternations and modifications within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

The drawings are included to provide further understanding of this disclosure, which constitute a part of the specification and illustrate the exemplary embodiments of this disclosure, and are used for setting forth the principles of this disclosure together with the description. It is clear and understood that the accompanying drawings in the following description are some embodiments of this disclosure, and for those of ordinary skills in the art, other accompanying drawings may be obtained according to these accompanying drawings without making an inventive effort. In the drawings:
FIG 1 is a schematic diagram of a scenario where a resource of an unlicensed band is used through contention at the unlicensed band;
FIG 2 is a schematic diagram of another scenario where a resource of an unlicensed band is used through contention at the unlicensed band;
FIG. 3 is a schematic diagram of reporting a CQI in an *m-th* subframe by UE according to a CQI request of an *n-th* subframe;
FIG 4 is a flowchart of a method for feeding back channel information of an unlicensed band of Embodiment 1;
FIG. 5 is a flowchart of a method for feeding back channel information of an unlicensed band of Embodiment 2;
FIG 6 is a flowchart of a method for feeding back channel information of an unlicensed band of Embodiment 3;
FIG 7 is a schematic diagram of an application scenario of Embodiment 3;
FIG. 8 is a flowchart of a method for feeding back channel information of an unlicensed band of Embodiment 4;
FIG. 9 is a flowchart of a method for feeding back channel information of an unlicensed band of Embodiment 5;
FIG 10 is a flowchart of a method for feeding back channel information of an unlicensed band of Embodiment 6;
FIG. 11 is a schematic diagram of a structure of an apparatus for feeding back channel information of an unlicensed band corresponding to the method of Embodiment 1;
FIG. 12 is a schematic diagram of a structure of an apparatus for feeding back channel information of an unlicensed band corresponding to the method of Embodiment 2;
FIG. 13 is a schematic diagram of a structure of an apparatus for feeding back channel information of an unlicensed band corresponding to the method of Embodiment 3;
FIG. 14 is a schematic diagram of a structure of an apparatus for feeding back channel information of an unlicensed band corresponding to the method of Embodiment 4;
FIG. 15 is a schematic diagram of a structure of an apparatus for feeding back channel information of an unlicensed band corresponding to the method of Embodiment 5;
FIG. 16 is a schematic diagram of a structure of an apparatus for feeding back channel information of an unlicensed band corresponding to the method of Embodiment 6;
FIG. 17 is a schematic diagram of a structure of UE of an embodiment;
FIG. 18 is a schematic diagram of a structure of an eNB of an embodiment; and
FIG. 19 is a schematic diagram of a topology of a communication system of an embodiment.

### Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Various embodiments of this disclosure shall be described below with reference to the accompanying drawings. These implementations are illustrative only, and are not intended to limit this disclosure.

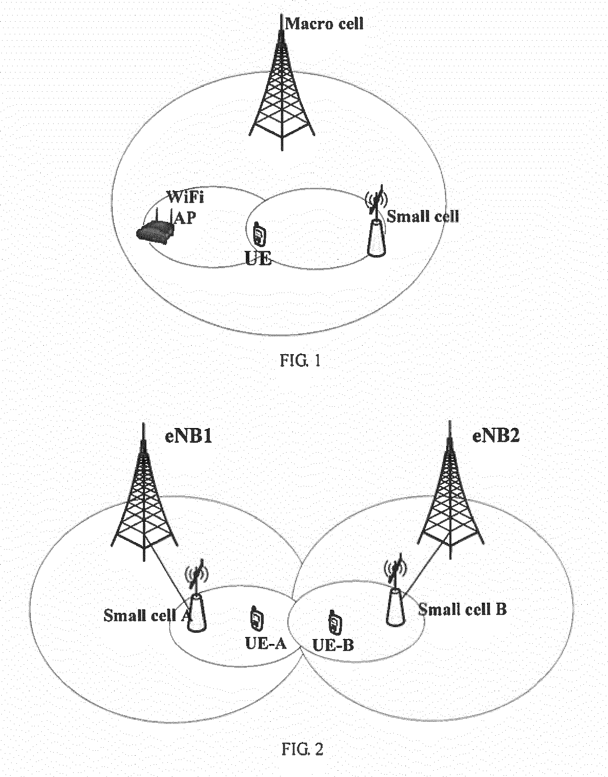

Generally speaking, there are two typical scenarios shown in FIG. 1 and FIG. 2 (but it is not limited thereto) for use of a resource of an unlicensed band in LTE. As shown in FIG 1, a first scenario is that an eNB (including a small cell) of the LTE and APs of WiFi use an unlicensed band in a contention manner, and what contending with the LTE system is another WiFi system. Standards adopted by the two systems are different, and as use of the WiFi system at an unlicensed band is very mature, the newly-introduced LTE system can only occupy the channel by ensuring that no interference is posed on the WiFi system using the band, or it may occupy the channel for a period of time when it is found through detection that the channel is not used by the WiFi system. During occupation by the LTE, communication and data transmission may be performed between the eNB of the LTE and the UE of the LTE. As shown in FIG. 2, another scenario is that an eNB of an LTE contends with an eNB of another LTE, and the two eNBs may be two eNBs of the same operator, and may also be two eNBs of different operators. What differs from the scenario shown in FIG. 1 is that standards adopted by the two contending eNBs are identical.

No matter the scenario shown in FIG 1 or the scenario shown in FIG. 2, once an eNB of an LTE detects that the unlicensed band is in an idle state, the eNB of the LTE may transmit pilot signals (preambles) or other signals being able of labeling that the signals are LTE signals, the signals being used to label that the eNB of the LTE has occupied the resource of the unlicensed band, which may be used for subsequent data transmission.

For the LTE system, before data transmission, an eNB must obtain channel quality between the eNB and a UE end first, the channel quality being obtained by the UE by measuring a reference signal transmitted by the eNB at a fixed position and time. After obtaining a measurement result of the channel quality, the UE quantizes the result into a CQI (channel quality indicator) and feeds back it to the eNB via a PUCCH (physical uplink control channel) or a PUSCH (physical uplink shared channel). And the reference signal transmitted by the eNB may be a preamble, or a CRS (cell-specific reference signal), or a CSI-RS (channel status information reference signal).

Taking complexity of network configuration into consideration, CQI measurement and feedback slot are definitely specified in existing standards. First, a CQI report of an *n-th* subframe is based on a CQI measurement result of the UE end, and such measurement is performing detection based on a known reference signal resource, the reference signal resource being an *(n-n_{CQI_ref})-th* downlink subframe or a special subframe. For periodic CQI feedback, n_{CQI_ref} must be a minimal integer greater than or equal to 4, so that this subframe (the *(n-n_{CQI_ref})-th* subframe) is a valid downlink subframe or a special subframe. And for aperiodic CQI feedback, if CQI feedback is triggered by the eNB via a PDCCH, a value of n_{CQI_ref} must be so selected that a valid downlink subframe to which the reference signal resource corresponds is a downlink subframe occupied by the PDCCH. An existing standard may be referred to for a definition of "a valid downlink subframe or a special subframe", in brief, if the eNB configures that the subframe is a downlink subframe or a special subframe, it is a valid downlink subframe or a special subframe.

If an LTE system which is accessed by contention at an unlicensed band is taken into account, as it is unable to predict whether use of the channel can be obtained through contention at a next moment, a frame structure for use in future transmission, that is, which are downlink subframes, special subframes, or uplink subframes, etc., cannot be preconfigured, hence, subframes where reference signals are measured cannot be definitely notified to the UE in advance, thereby resulting in an error of report of the CQI.

For example, if the eNB configured that the UE reports the CQI at an *n-th* subframe moment, according to an existing standard, the UE needs to measure reference signals within an *(n-4)-th* subframe. If the eNB of the LTE does not occupy the unlicensed channel (because it is possible that the WiFi has occupied the channel) at the *(n-4)-th* subframe, but according to a definition in a standard, for an FDD system, all downlink subframes are valid downlink subframes, and the UE may only feed back a measurement result performed on the *(n-4)-th* subframe. However, as there exists no LTE reference signal in the subframe, there will be severe deviation in the measured CQI, and will finally result in unsuccess of data transmission by the eNB in a transmission mode selected according to the CQI. For a TDD system, even though there exists a valid downlink subframe in a preconfigured transmitted frame structure, if the valid downlink subframe is not obtained by the eNB of the LTE through contention, it will result in that a finally measured CQI is extremely inaccurate.

And on the other hand, even though the eNB of the LTE occupies a resource of an unlicensed band, according to usual understanding, such occupation can only sustain a period of time, and then the resource must be released for contention by other systems, such as an access points (AP) of WiFi, or an eNB of another LTE. If an existing standard is followed, for aperiodic CQI feedback, if the eNB triggers the UE to feed back at the *n-th* subframe, the UE needs to measure a reference signal in the *n-th* subframe, and then reports a measurement result at an *(n*+*4)-th* subframe (corresponding to an uplink subframe); hence, as whether the UE can occupy the channel at this subframe moment cannot be determined, unpunctual report of the CQI will be resulted.

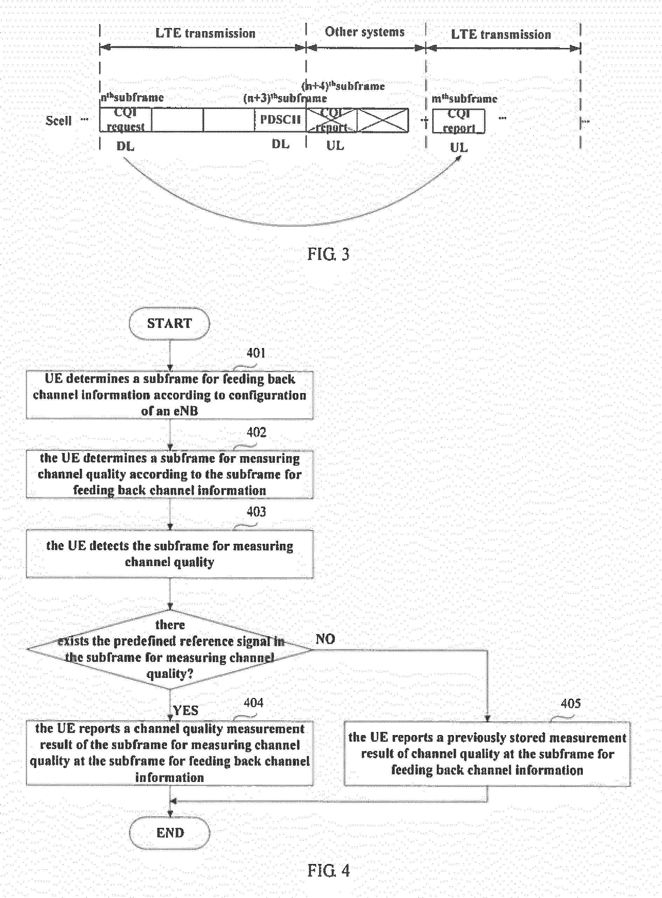

As shown in FIG. 3, the *(n*+*4)*-*th* subframe is occupied by another system, such as WiFi. Hence, the UE has to wait for a next uplink subframe for uploading the CQI. For example, at an *m-th* subframe moment, the UE may occupy the unlicensed channel for uplink transmission, hence, the CQI measured on the *n-th* subframe may be fed back at the *m-th* subframe. However, if, as shown in FIG. 3, the eNB occupies the channel and transmits PDSCH downlink data at an *(n*+*3)-th* subframe, it is usual that such data will contain a reference signal. Relatively speaking, this reference signal may reflect quality of a current channel more accurate than that reflected by a reference signal of the *n-th* subframe; however, existing standards do not support feeding back at the *m-th* subframe CQI measurement data using a reference signal of the *(n*+*3)-th* subframe. Feeding back at the *m*-*th* subframe a CQI measurement result of the *n-th* subframe will result in that channel measurement data are out of date, thus, it is inaccurate.

It can be seen that on the one hand, as whether the LTE system can occupy a downlink resource of the unlicensed band cannot be determined in advance, a CQI measured by UE based on an existing valid downlink subframe will be extremely inaccurate. And on the other hand, even though the CQI may be measured, latest CQI information cannot be fed back in time as the UE cannot ensure that an uplink resource at the unlicensed band can be occupied.

The embodiments of this disclosure shall be described below with reference to the accompanying drawings.

### Embodiment 1

This embodiment provides a method for feeding back channel information of an unlicensed band, applicable to user equipment (UE). FIG 4 is a flowchart of the method. Referring to FIG. 4, the method includes:
step 401: UE determines a subframe for feeding back channel information according to configuration of an eNB;
step 402: the UE determines a subframe for measuring channel quality according to the subframe for feeding back channel information;
step 403: the UE detects whether there exists a predefined reference signal in the subframe for measuring channel quality; and
step 404: when there exists the predefined reference signal in the subframe for measuring channel quality, the UE reports a channel quality measurement result of the subframe for measuring channel quality at the subframe for feeding back channel information.

In this embodiment, the eNB may configure the subframe for the UE to feed back the channel information, and the UE may determine the subframe for feeding back the channel information according to the configuration of the eNB. Hence, the UE may determine the subframe for measuring the channel quality according to the subframe for feeding back the channel information. For example, for periodic CQI feedback, the eNB configures that the UE performs CQI feedback at an *n-th* uplink subframe, and the UE may determine that the subframe for measuring the channel quality is an *(n-n_{CQI_ref})-th* subframe, that is, the UE is to perform channel quality measurement on the *(n-n_{CQI_ref})-th* subframe, and feeds back the measurement result at the *n-th* subframe.

In this embodiment, what is different from the prior art is that before performing channel quality measurement on the subframe for measuring the channel quality (taking the above as an example, the *(n-n_{CQI_ref})-th* subframe), the UE first detects whether there exists a predefined reference signal in the subframe for measuring the channel quality, and the UE reports the measurement result of channel quality on the subframe for measuring the channel quality at the subframe for feeding back channel information only when there exists the predefined reference signal in the subframe for measuring the channel quality. The predefined reference signal is transmitted by the eNB in its valid downlink subframe or special subframe, and if the reference signal is detected, that means that the subframe is a valid downlink subframe or a special subframe, and is not a resource occupied by another system (such as a WiFi system). The measurement of the channel quality on the subframe based on this reference signal is relatively accurate, thereby solving a problem that the UE is unable to predetermine whether the LTE system can occupy a downlink resource of the unlicensed band and hence the CQI obtained by measurement based on an existing valid downlink subframe or special subframe is extremely inaccurate. The predefined reference signal may be a CRS, and may also be other reference signals, such as a preamble, or a CSI-RS, etc.

In this embodiment, if the UE detects that there exists the predefined reference signal in the subframe for measuring the channel quality, the UE may perform channel quality measurement based on the subframe for measuring the channel quality, so as to report the measurement result on the subframe at the subframe for feeding back channel information. Alternatively, the UE may further store the measurement result obtained through measurement, or update a stored measurement result, for subsequent use.

In this embodiment, if the UE detects that there exists no predefined reference signal in the subframe for measuring the channel quality, it is possible that the eNB does not occupy the subframe for measuring the channel quality; that is, the subframe for measuring the channel quality is occupied by another system. Then, the UE may report a previously stored measurement result of channel quality at the subframe for feeding back channel information (step 405), rather than feed back the measurement result on the subframe for measuring the channel quality. Hence, although the previously stored measurement result may be out of date, the measurement result is more accurate than a measurement result based on a resource occupied by the other system.

In this embodiment, the UE may upload the measurement result via a PUCCH of a primary cell (PCell) connected to the UE, or may upload the measurement result via a PUSCH of the PCell connected to the UE; however, this embodiment is not limited thereto.

In this embodiment, relative to the valid downlink subframe or special subframe defined in an existing standard (TS36.213), its definition may be amended into "it is configured as a downlink subframe or a special subframe for that UE, or it is identified as a downlink subframe or a special subframe for that UE if the UE could detect some pre-defined reference signal (for example CRS, preamble, etc.,), on that subframe...". That is, it is configured as a downlink subframe or a special subframe, or if a predefined reference signal can be detected by UE within a subframe, the subframe can be identified as a downlink subframe or a special subframe.

With the method of this embodiment, a problem that the UE is unable to predetermine whether the LTE system can occupy a downlink resource of the unlicensed band and hence the CQI obtained by measurement based on an existing valid downlink subframe or special subframe is extremely inaccurate is solved.

### Embodiment 2

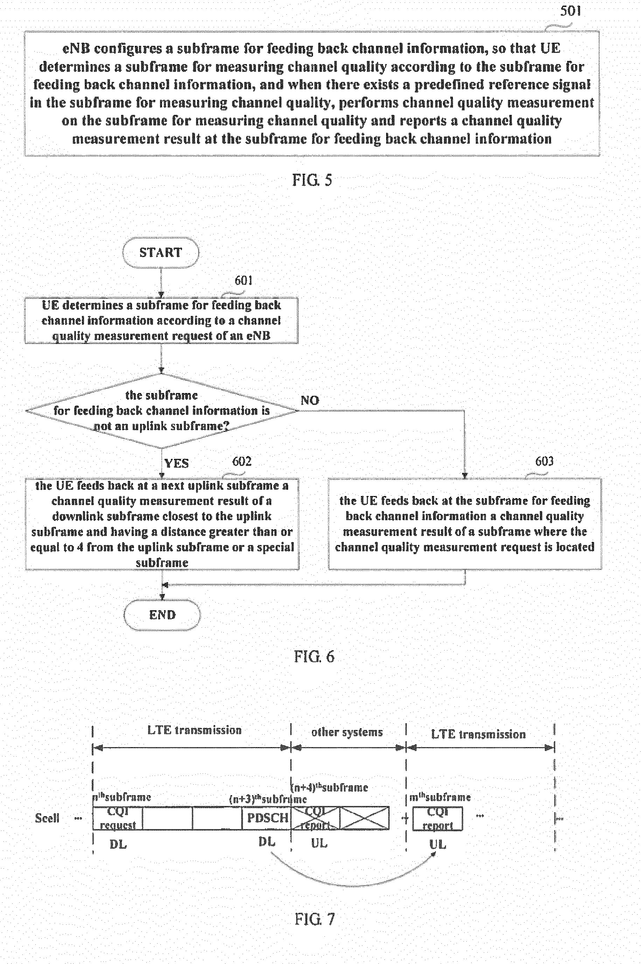

This embodiment provides a method for feeding back channel information of an unlicensed band, applicable to an eNB. This method is processing at an eNB side corresponding to the method of Embodiment 1, and the eNB may be a small cell in an LTE system, or another eNB. FIG 5 is a flowchart of the method. Referring to FIG 5, the method includes:
step 501: eNB configures a subframe for feeding back channel information, so that UE determines a subframe for measuring channel quality according to the subframe for feeding back channel information, and when there exists a predefined reference signal in the subframe for measuring channel quality, performs channel quality measurement on the subframe for measuring channel quality and reports a channel quality measurement result at the subframe for feeding back channel information.

In this embodiment, as described above, the eNB configures the subframe for the UE to perform CQI feedback, such as an *n-th* subframe, hence, the UE may determine the subframe for measuring channel quality, that is, an *(n-n_{CQI_ref})-th* subframe. When there exists a predefined reference signal in the *(n-n_{CQI_ref})-th* subframe, the UE may perform channel quality measurement based on the *(n-n_{CQI_ref})-th* subframe, and feed back a measurement result, that is, a corresponding CQI value, at the *n-th* subframe, thereby solving a problem that the UE is unable to predetermine whether the LTE system can occupy a downlink resource of the unlicensed band and hence the CQI obtained by measurement based on an existing valid downlink subframe or special subframe is extremely inaccurate. Embodiment 1 may be referred to for the processing of the UE.

In this embodiment, the eNB may transmit signaling for configuring the subframe for feeding back channel information via a PDCCH of a primary cell (PCell) connected to the UE or via RRC signaling, and may also transmit the above configuration signaling via other channels and/or signaling.

### Embodiment 3

This embodiment provides a method for feeding back channel information of an unlicensed band, applicable to user equipment (UE). FIG. 6 is a flowchart of the method. Referring to FIG. 6, the method includes:
step 601: UE determines a subframe for feeding back channel information according to a channel quality measurement request of an eNB;
step 602: when the subframe for feeding back channel information is not an uplink subframe, the UE feeds back at a next uplink subframe a channel quality measurement result of a downlink subframe closest to the uplink subframe and having a distance greater than or equal to 4 from the uplink subframe or of a special subframe;
   and
Step 603: when the subframe for feeding back channel information is an uplink subframe, the UE feeds back at the subframe for feeding back channel information a channel quality measurement result of a subframe where the channel quality measurement request is located.

FIG. 7 is a schematic diagram of an application scenario of this embodiment. As shown in FIG. 7, for aperiodic CQI feedback, an eNB transmits a channel quality measurement CQI request at an *n-th* subframe, and after receiving the CQI request, the UE may determine the subframe for feeding back channel information, i.e. an *(n*+*4)-th* subframe, according to a subframe where the CQI request is located (an *n-th* subframe). However, as the *(n*+*4)-th* subframe has been occupied by another system, the UE may perform CQI feedback at a next uplink subframe, i.e. an *m-th* subframe. In this embodiment, the UE feeds back a measurement result of an *(n*+*3)-th* subframe, rather than feeds back a measurement result of the *n-th* subframe. A distance between the *(n*+*3)-th* subframe and the *m-th* subframe needs to be greater than or equal to 4, and the distance between the *(n*+*3)-th* subframe and the *m-th* subframe is shortest relative to subframes of distances from the *m-th* subframe greater than or equal to 4. Hence, as the UE feeds back a CQI of a latest downlink subframe, it is ensured that the CQI is able to most accurately reflect channel quality in data transmission, thereby solving a problem that the UE is unable to ensure that it can occupy an uplink resource of the unlicensed band and hence the latest CQI cannot be fed back in time.

In this embodiment, the UE may perform channel quality measurement on the downlink subframe closest to the uplink subframe and having a distance greater than or equal to 4 from the uplink subframe or on the special subframe (such as an *(n*+*3)-th* subframe) based on a reference signal in the downlink subframe or a reference signal in the special subframe. In this embodiment, the subframe is a downlink subframe and some reference signals may be contained in the subframe, and the UE may perform channel quality measurement on the subframe based on the reference signals.

In this embodiment, relative to a position of a reference signal needing to be measured by UE for aperiodic CQI feedback defined in an existing standard (TS36.213), its definition may be amended into "The CSI reference resource is defined by a single downlink or special subframe *n*-*n_{CQI_ref}*,...where for aperiodic CSI reporting,...*n_{CQI_ref}* is minimum {the smallest value greater than or equal to 4, such that it corresponds to a valid downlink or valid special subframe, a value such that the reference resource is in the same valid downlink or valid special subframe as the corresponding CSI request in an uplink DCI format}". That is, the CSI reference resource is defined by a single downlink subframe or special subframe n-n_{CQI_ref}, wherein, for report of an aperiodic CSI, n-n_{CQI_ref} is the minimum value of the following two values. One is a minimum value greater than or equal to 4, such that the subframe corresponds to a valid downlink subframe or a valid special subframe. And the other value makes the reference resource to be located in a valid downlink subframe or a valid special subframe, the subframe being the same subframe as that transmitting the CSI request of an uplink DCI format.

With the method of this embodiment, a problem that the UE is unable to ensure that is can occupy an uplink resource of the unlicensed band and hence the latest CQI cannot be fed back in time is solved.

### Embodiment 4

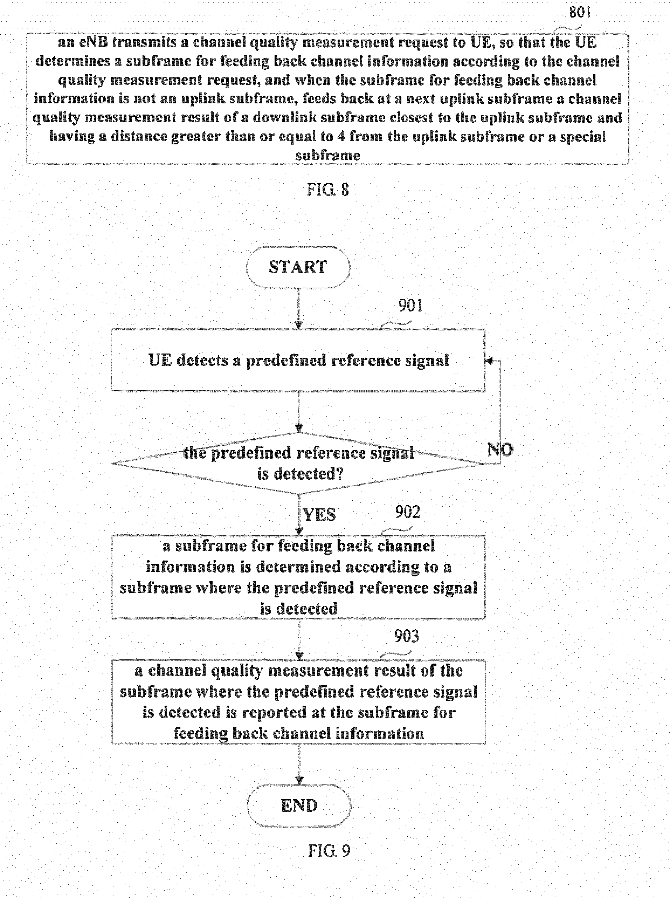

This embodiment further provides a method for feeding back channel information of an unlicensed band, applicable to an eNB. This method is processing at an eNB side corresponding to the method of Embodiment 3, and the eNB may be a small cell in an LTE system, or another eNB. FIG 8 is a flowchart of the method. Referring to FIG 8, the method includes:
step 801: an eNB transmits a channel quality measurement request to UE, so that the UE determines a subframe for feeding back channel information according to the channel quality measurement request, and when the subframe for feeding back channel information is not an uplink subframe, feeds back at a next uplink subframe a channel quality measurement result of a downlink subframe closest to the uplink subframe and having a distance greater than or equal to 4 from the uplink subframe or of a special subframe.

In this embodiment, an existing standard may be referred to for a method for transmitting the channel quality measurement request by the eNB, and Embodiment 3 may be referred to for the processing of the UE.

With the method of this embodiment, a problem that the UE is unable to ensure that it can occupy a downlink resource of the unlicensed band and hence the latest CQI cannot be fed back in time is solved.

### Embodiment 5

This embodiment provides a method for feeding back channel information of an unlicensed band, applicable to UE. FIG 9 is a flowchart of the method. Referring to FIG 9, the method includes:
step 901: UE detects a predefined reference signal;
step 902: when the predefined reference signal is detected, a subframe for feeding back channel information is determined according to a subframe where the predefined reference signal is detected; and
step 903: a channel quality measurement result of the subframe where the predefined reference signal is detected is reported at the subframe for feeding back channel information.

In this embodiment, temporal requirements on measurement and report are changed, that is, limits of n and n_{CQI_ref} are cancelled, and explicitly configuring the CQI feedback or triggering the aperiodic CQI feedback by the eNB is changed into implicitly indicating the CQI feedback. That is, once the eNB occupies the resource of the unlicensed band, it will transmit the predefined reference signal, and when the UE detects the predefined reference signal, the UE will determine the subframe for feeding back channel information according to a subframe where the predefined reference signal is detected, and report the measurement result at the subframe for feeding back channel information.

For example, if the UE detects there exists a predefined reference signal in the *n-th* subframe, it may feed back the CQI in an *(n*+*k)-th* subframe, k being 2, 3, or 4, and preferably 4. Hence, it is not needed to wait for the eNB to trigger the CQI feedback in a PDCCH via signaling, and errors of CQI measurement and report in using the LTE technology at an unlicensed band may be avoided.

In this embodiment, the predefined reference signal may be a preamble, or a CRS, and may also be a CSI-RS, etc.

In this embodiment, when the UE detects the predefined reference signal, it may perform channel quality measurement based on a subframe where the predefined reference signal is detected, so as to report a measurement result at the subframe for feeding back channel information.

With the method of this embodiment, errors of CQI measurement and report in using the LTE technology at an unlicensed band may be avoided.

### Embodiment 6

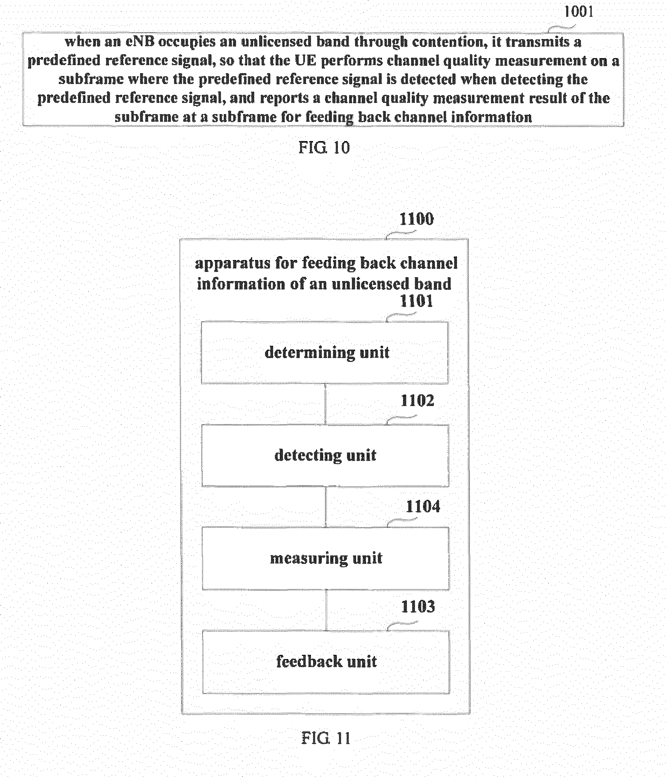

This embodiment further provides a method for feeding back channel information of an unlicensed band, applicable to an eNB. This method is processing at an eNB side corresponding to the method of Embodiment 5, and the eNB may be a small cell in an LTE system, or another eNB. FIG. 10 is a flowchart of the method. Referring to FIG 10, the method includes:
step 1001: when an eNB occupies an unlicensed band through contention, it transmits a predefined reference signal, so that the UE performs channel quality measurement on a subframe where the predefined reference signal is detected when detecting the predefined reference signal, and reports a channel quality measurement result of the subframe at a subframe for feeding back channel information.

In this embodiment, as described above, once the eNB occupies the unlicensed band, it will transmit the predefined reference signal, which may be a preamble, or a CRS, or a CSI-RS, etc. When the UE detects there exists a predefined reference signal in the *n-th* subframe, it may perform channel quality measurement based on the *n-th* subframe, and feed back a measurement result at the *(n*+*k)-th* subframe, that is, a value of the CQI, k being 2, 3, or 4, and preferably 4. Such a method needs not to wait for the eNB to trigger the CQI feedback in a PDCCH via signaling, and errors of CQI measurement and report in using the LTE technology at an unlicensed band may be avoided.

The methods of the embodiments are described above with reference to six embodiments. And in actual implementation, the methods of these embodiments may be used in a combined manner; for example, the methods of the embodiments 1 and 2 may be combined with the methods of the embodiments 3 and 4. As the resource of the unlicensed band is used in a contention manner, rather than a centralized allocation mechanism, a conventional CQI report based on configuration or triggering by an eNB is unable to ensure that the CQI measured by an UE end is valid data. Such a defect is overcome by the methods of embodiments 1-6, and errors of CQI measurement and report in using the LTE technology at an unlicensed band may be avoided.

### Embodiment 7

This embodiment provides an apparatus for feeding back channel information of an unlicensed band, applicable to UE. As principles of the apparatus for solving problems are similar to that of the method of Embodiment 1, the implementation of the method of Embodiment 1 may be referred to for implementation of the apparatus, with identical contents being not going to be described herein any further.

FIG 11 is a schematic diagram of a structure of the apparatus. Referring to FIG. 11, the apparatus 1100 for feeding back channel information of an unlicensed band includes a determining unit 1101, a detecting unit 1102 and a feedback unit 1103.

The determining unit 1101 is configured to determine a subframe for feeding back channel information according to configuration of an eNB, and determine a subframe for measuring channel quality according to the subframe for feeding back channel information;

The detecting unit 1102 is configured to detect whether there exists a predefined reference signal in the subframe for measuring channel quality.

And the feedback unit 1103 is configured to, when it is detected by the detecting unit 1102 that there exists the predefined reference signal in the subframe for measuring channel quality, report a channel quality measurement result of the subframe for measuring channel quality at the subframe for feeding back channel information.

In this embodiment, the apparatus may further include:
a measuring unit 1104 configured to, when it is detected by the detecting unit 1102 that there exists the predefined reference signal in the subframe for measuring channel quality, perform channel quality measurement on the subframe for measuring channel quality.

In this embodiment, the feedback unit 1103 is also configured to report a previously stored channel quality measurement result at the subframe for feeding back channel information when it is detected by the detecting unit 1102 that there exists no predefined reference signal in the subframe for measuring channel quality.

In this embodiment, the feedback unit 1103 may report the channel quality measurement result via a PUCCH or a PUSCH of a primary cell connected to the UE.

With the apparatus of this embodiment, errors of CQI measurement and report in using the LTE technology at an unlicensed band may be avoided.

### Embodiment 8

This embodiment further provides an apparatus for feeding back channel information of an unlicensed band, applicable to an eNB. As principles of the apparatus for solving problems are similar to that of the method of Embodiment 2, the implementation of the method of Embodiment 2 may be referred to for implementation of the apparatus, with identical contents being not going to be described herein any further.

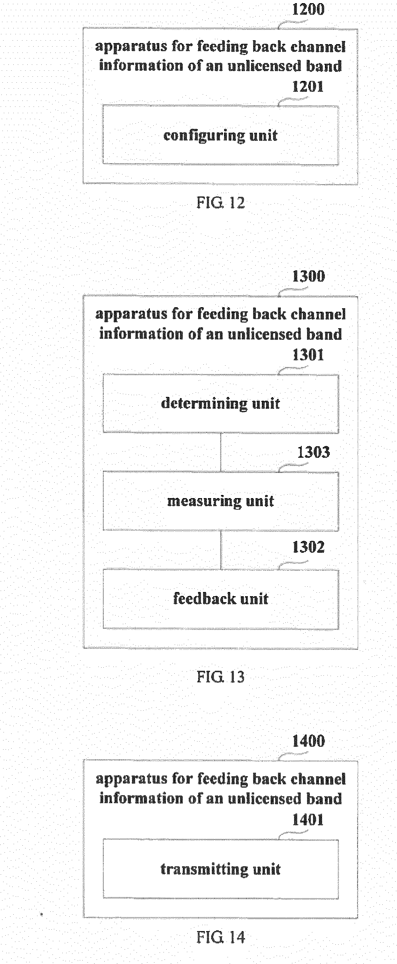

FIG. 12 is a schematic diagram of a structure of the apparatus. Referring to FIG. 12, the apparatus 1200 for feeding back channel information of an unlicensed band includes a configuring unit 1201 configured to configure a subframe for feeding back channel information, so that UE determines a subframe for measuring channel quality according to the subframe for feeding back channel information, and when there exists a predefined reference signal in the subframe for measuring channel quality, performs channel quality measurement on the subframe for measuring channel quality and reports a channel quality measurement result at the subframe for feeding back channel information.

In this embodiment, the configuring unit 1201 may transmit signaling for configuring the subframe for feeding back channel information via a PUCCH of a primary cell connected to the UE or via RRC signaling.

With the apparatus of this embodiment, errors of CQI measurement and report in using the LTE technology at an unlicensed band may be avoided.

### Embodiment 9

This embodiment further provides an apparatus for feeding back channel information of an unlicensed band, applicable to UE. As principles of the apparatus for solving problems are similar to that of the method of Embodiment 3, the implementation of the method of Embodiment 3 may be referred to for implementation of the apparatus, with identical contents being not going to be described herein any further.

FIG. 13 is a schematic diagram of a structure of the apparatus. Referring to FIG 13, the apparatus 1300 for feeding back channel information of an unlicensed band includes a determining unit 1301 and a feedback unit 1302.

The determining unit 1301 is configured to determine a subframe for feeding back channel information according to a channel quality measurement request of an eNB.

And the feedback unit 1302 is configured to, when the subframe for feeding back channel information is not an uplink subframe, feed back at a next uplink subframe a channel quality measurement result of a downlink subframe closest to the uplink subframe and having a distance greater than or equal to 4 from the uplink subframe or of a special subframe.

In this embodiment, the apparatus may further include:
a measuring unit 1303 configured to perform channel quality measurement on the downlink subframe closest to the uplink subframe and having a distance greater than or equal to 4 from the uplink subframe or on the special subframe, based on a reference signal in the downlink subframe or a reference signal in the special subframe.

With the apparatus of this embodiment, errors of CQI measurement and report in using the LTE technology at an unlicensed band may be avoided.

### Embodiment 10

This embodiment further provides an apparatus for feeding back channel information of an unlicensed band, applicable to an eNB. As principles of the apparatus for solving problems are similar to that of the method of Embodiment 4, the implementation of the method of Embodiment 4 may be referred to for implementation of the apparatus, with identical contents being not going to be described herein any further.

FIG. 14 is a schematic diagram of a structure of the apparatus. Referring to FIG. 14, the apparatus 1400 for feeding back channel information of an unlicensed band includes a transmitting unit 1401 configured to transmit a channel quality measurement request to UE, so that the UE determines a subframe for feeding back channel information according to the channel quality measurement request, and when the subframe for feeding back channel information is not an uplink subframe, feeds back at a next uplink subframe a channel quality measurement result of a downlink subframe closest to the uplink subframe and having a distance greater than or equal to 4 from the uplink subframe or of a special subframe.

With the apparatus of this embodiment, errors of CQI measurement and report in using the LTE technology at an unlicensed band may be avoided.

### Embodiment 11

This embodiment further provides an apparatus for feeding back channel information of an unlicensed band, applicable to UE. As principles of the apparatus for solving problems are similar to that of the method of Embodiment 5, the implementation of the method of Embodiment 5 may be referred to for implementation of the apparatus, with identical contents being not going to be described herein any further.

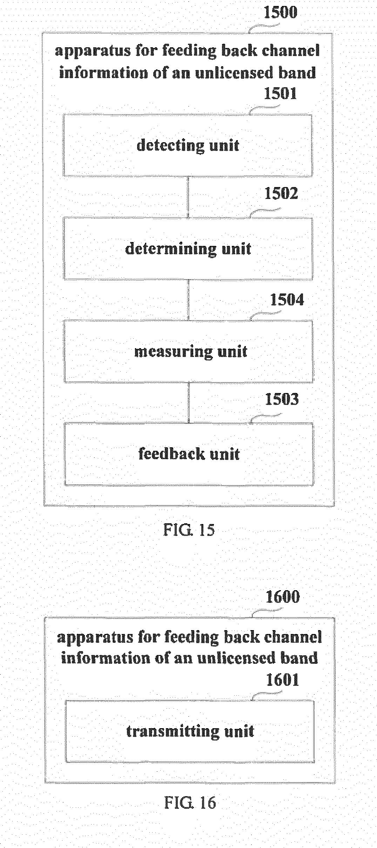

FIG 15 is a schematic diagram of a structure of the apparatus. Referring to FIG. 15, the apparatus 1500 for feeding back channel information of an unlicensed band includes: a detecting unit 1501, a determining unit 1502 and a feedback unit 1503.

The detecting unit 1501 is configured to detect a predefined reference signal.

The determining unit 1502 is configured to, when the detecting unit 1501 detects the predefined reference signal, determine a subframe for feeding back channel information according to a subframe where the predefined reference signal is detected.

And the feedback unit 1503 is configured to report a channel quality measurement result of the subframe where the predefined reference signal is detected at the subframe for feeding back channel information.

In this embodiment, the apparatus may further include:
a measuring unit 1504 configured to perform channel quality measurement on the subframe where the predefined reference signal is detected.

With the apparatus of this embodiment, errors of CQI measurement and report in using the LTE technology at an unlicensed band may be avoided.

### Embodiment 12

This embodiment further provides an apparatus for feeding back channel information of an unlicensed band, applicable to an eNB. As principles of the apparatus for solving problems are similar to that of the method of Embodiment 6, the implementation of the method of Embodiment 6 may be referred to for implementation of the apparatus, with identical contents being not going to be described herein any further.

FIG 16 is a schematic diagram of a structure of the apparatus. Referring to FIG 16, the apparatus 1600 for feeding back channel information of an unlicensed band includes a transmitting unit 1601 configured to, when the eNB occupies an unlicensed band through contention, transmit a predefined reference signal, so that the UE performs channel quality measurement on a subframe where the predefined reference signal is detected when the predefined reference signal is detected by the UE, and reports a channel quality measurement result of the subframe at a subframe for feeding back channel information.

With the apparatus of this embodiment, errors of CQI measurement and report in using the LTE technology at an unlicensed band may be avoided.

### Embodiment 13

This embodiment further provides UE, including the apparatus for feeding back channel information of an unlicensed band as described in Embodiment 7, 9, or 11.

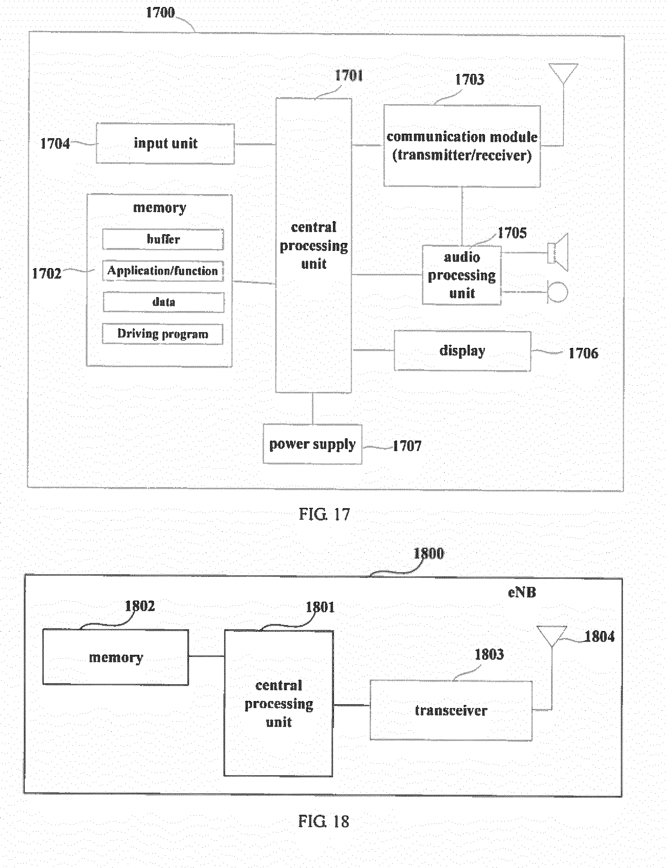

FIG 17 is a schematic diagram of a structure of the UE of the embodiment of this disclosure. As shown in FIG. 17, the UE 1700 may include a central processing unit 1701 and a memory 1702, the memory 1702 being coupled to the central processing unit 1701. It should be noted that this figure is illustrative only, and other types of structures may also be used, so as to supplement or replace this structure and achieve a telecommunications function or other functions.

In an implementation, the functions of the apparatus for feeding back channel information of an unlicensed band may be integrated into the central processing unit 1701, and the central processing unit 1701 carries out functions of the apparatus for feeding back channel information of an unlicensed band described in Embodiment 7, 9, or 11. In this implementation, the functions of the apparatus for feeding back channel information of an unlicensed band are incorporated herein, and shall not be described herein any further.

In another implementation, the apparatus for feeding back channel information of an unlicensed band and the central processing unit 1701 may be configured separately. For example, the apparatus for feeding back channel information of an unlicensed band may be configured as a chip connected to the central processing unit 1701, with its functions being realized under control of the central processing unit 1701.

As shown in FIG. 17, the UE 1700 may further include a communication module 1703, an input unit 1704, an audio processing unit 1705, a display 1706 and a power supply 1707. It should be noted that the UE 1700 does not necessarily include all the parts shown in FIG. 17, and furthermore, the UE 1700 may further include parts not shown in FIG. 17, and the prior art may be referred to.

As shown in FIG. 17, the central processing unit 1701 is sometimes referred to as a controller or control, and may include a microprocessor or other processor devices and/or logic devices. The central processing unit 1701 receives input and controls operations of every component of the UE 1700.

In this embodiment, the memory 1702 may be, for example, one or more of a buffer memory, a flash memory, a hard drive, a mobile medium, a volatile memory, a nonvolatile memory, or other suitable devices, which may store the above planned network information and deployed network information, and may further store a program executing related information. And the central processing unit 1701 may execute the program stored in the memory 1702, so as to realize information storage or processing, etc. Functions of other parts are similar to those of the prior art, which shall not be described herein any further. The parts of the UE 1700 may be realized by specific hardware, firmware, software, or any combination thereof, without departing from the scope of the present disclosure.

With the UE of this embodiment, errors of CQI measurement and report in using the LTE technology at an unlicensed band may be avoided.

### Embodiment 14

This embodiment further provides an eNB, including the apparatus for feeding back channel information of an unlicensed band as described in Embodiment 8, 10, or 12.

FIG 18 is a schematic diagram of a structure of the eNB of the embodiment of this disclosure. As shown in FIG 18, the eNB 1800 may include a central processing unit (CPU) 1801 and a memory 1802, the memory 1802 being coupled to the central processing unit 1801. In this embodiment, the memory 1802 may store various data, and furthermore, it may store a program for information processing, and the program is executed under control of the central processing unit 1801 to receive various information transmitted by UE and transmit various information to UE.

In an implementation, the functions of the apparatus for feeding back channel information of an unlicensed band may be integrated into the central processing unit 1801, and the central processing unit 1801 carries out functions of the apparatus for feeding back channel information of an unlicensed band described in Embodiment 8, 10, or 12. In this implementation, the functions of the apparatus for feeding back channel information of an unlicensed band are incorporated herein, and shall not be described herein any further.

In another implementation, the apparatus for feeding back channel information of an unlicensed band and the central processing unit 1801 may be configured separately. For example, the apparatus for feeding back channel information of an unlicensed band may be configured as a chip connected to the central processing unit 1801, with its functions being realized under control of the central processing unit 1801.

Furthermore, as shown in FIG 18, the eNB 1800 may include a transceiver 1803, and an antenna 1804, etc. In this embodiment, functions of the above components are similar to those in the prior art, and shall not be described herein any further. It should be noted that the eNB 1800 does not necessarily include all the parts shown in FIG 18, and furthermore, the eNB 1800 may further include parts not shown in FIG. 18, and the prior art may be referred to.

With the eNB of this embodiment, errors of CQI measurement and report in using the LTE technology at an unlicensed band may be avoided.

### Embodiment 15

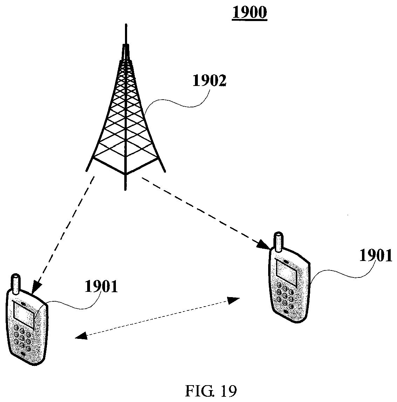

This embodiment further provides a communication system. FIG. 19 is a schematic diagram of a topology of the communication system. As shown in FIG. 19, the communication system 1900 includes UE 1901 and an eNB 1902.

In this embodiment, the eNB 1902 is configured to configure the UE 1901 with a subframe for feeding back channel information, or transmit a channel quality measurement request to the UE 1901, or when occupying an unlicensed band through contention, transmit a predefined reference signal, etc. Furthermore, the eNB 1902 is further configured to carry out other functions of its signal transmission and reception, which shall not be described herein any further. In this embodiment, the eNB may be carried out by the eNB of Embodiment 14, the contents of which being incorporated herein, and being not going to be described herein any further.

In this embodiment, the UE 1901 is configured to exchange information with the eNB 1902. For example, it determines a subframe for measuring channel quality according to a subframe for feeding back channel information configured by the eNB, and when there exists a predefined reference signal in the subframe for measuring channel quality, measures channel quality of the subframe for measuring channel quality and reports a channel quality measurement result at the subframe for feeding back channel information. For another example, it determines a subframe for feeding back channel information according to a channel quality measurement request transmitted by the eNB, and when the subframe for feeding back channel information is not an uplink subframe, reports at a next uplink subframe a channel quality measurement result of a downlink subframe closest to the uplink subframe and having a distance greater than or equal to 4 from the uplink subframe or of a special subframe. For a further example, when a predefined reference signal transmitted by the eNB is detected, it measures channel quality of a subframe where the predefined reference signal is detected, and reports a channel quality measurement result of the subframe at the subframe for feeding back channel information. In this embodiment, the UE may be carried out by the UE of Embodiment 13, the contents of which being incorporated herein, and being not going to be described herein any further.

With the communication system of this embodiment, errors of CQI measurement and report in using the LTE technology at an unlicensed band may be avoided.

The apparatus of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principles of the present disclosure, and such variants and modifications fall within the scope of the present disclosure.

## Claims

1. An apparatus (1100) for feeding back channel information of an unlicensed band, applicable to user equipment - UE - (1901), the apparatus (1100) comprising:
a determining unit (1101) configured to determine a subframe for feeding back channel information of an unlicensed band
according to configuration of an eNB (1902), and determine a subframe for measuring channel quality according to the subframe for feeding back channel information;
a detecting unit (1102) configured to detect whether there exists a predefined reference signal in the subframe for measuring channel quality; and
a feedback unit (1103) configured to, when it is detected by the detecting unit (1102) that there exists a predefined reference signal in the subframe for measuring channel quality, report a channel quality measurement result of the subframe for measuring channel quality at the subframe for feeding back channel information;
wherein the feedback unit (1103) is configured to report the channel quality measurement result via a physical uplink control channel, PUCCH, or a physical uplink shared channel, PUSCH, of a primary cell connected to the UE.

2. The apparatus according to claim 1, wherein the apparatus further comprises:
a measuring unit (1104) configured to, when it is detected by the detecting unit (1102) that there exists a predefined reference signal in the subframe for measuring channel quality, measure channel quality of the subframe for measuring channel quality.

3. The apparatus according to claim 1, wherein,
the feedback unit (1103) is configured to report a previously stored channel quality measurement result at the subframe feeding back channel information when it is detected by the detecting unit (1102) that there exists no predefined reference signal in the subframe for measuring channel quality.

## Patentansprüche

1. Vorrichtung (1100) für Rückmeldung von Kanalinformationen eines unlizenzierten Bandes, die bei einem Benutzergerät - UE - (1901) angewendet werden kann, wobei die Vorrichtung (1100) Folgendes umfasst:
eine Bestimmungseinheit (1101), die konfiguriert ist, um einen Teilrahmen für Rückmeldung von Kanalinformationen eines unlizenzierten Bandes gemäß der Konfiguration eines eNB (1902) zu bestimmen und einen Teilrahmen zum Messen der Kanalqualität gemäß dem Teilrahmen für Rückmeldung von Kanalinformationen zu bestimmen;
eine Erkennungseinheit (1102), die konfiguriert ist, um zu erkennen, ob ein vorab definiertes Referenzsignal in dem Teilrahmen zum Messen der Kanalqualität vorhanden ist; und
eine Rückmeldungseinheit (1103), die konfiguriert ist, um, wenn von der Erkennungseinheit (1102) erkannt wird, dass ein vorab definiertes Referenzsignal in dem Teilrahmen zum Messen der Kanalqualität vorhanden ist, ein Kanalqualitätsmessergebnis des Teilrahmens zum Messen der Kanalqualität an dem Teilrahmen für Rückmeldung von Kanalinformationen mitzuteilen;
wobei die Rückmeldungseinheit (1103) konfiguriert ist, um das Kanalqualitätsmessergebnis über einen physischen Uplink-Steuerkanal, PUCCH, oder einen gemeinsamen physischen Uplink-Kanal, PUSCH, einer primären Zelle, die mit dem UE verbunden ist, mitzuteilen.

2. Vorrichtung nach Anspruch 1, wobei die Vorrichtung ferner Folgendes umfasst:
eine Messeinheit (1104), die konfiguriert ist, um, wenn von der Erkennungseinheit (1102) erkannt wird, dass ein vorab definiertes Referenzsignal in dem Teilrahmen zum Messen der Kanalqualität vorhanden ist, die Kanalqualität des Teilrahmens zum Messen der Kanalqualität zu messen.

3. Vorrichtung nach Anspruch 1, wobei
die Rückmeldungseinheit (1103) konfiguriert ist, um ein vorab gespeichertes Kanalqualitätsmessergebnis an dem Teilrahmen für Rückmeldung von Kanalinformationen mitzuteilen, wenn von der Erkennungseinheit (1102) erkannt wird, dass kein vorab definiertes Referenzsignal in dem Teilrahmen zum Messen der Kanalqualität vorhanden ist.

## Revendications

1. Appareil (1100) pour renvoyer des informations de canal d'une bande non autorisée, applicable à un équipement utilisateur - UE - (1901), l'appareil (1100) comprenant :
une unité de détermination (1101) configurée pour déterminer une sous-trame pour renvoyer des informations de canal d'une bande non autorisée selon la configuration d'un eNB (1902), et déterminer une sous-trame pour mesurer une qualité de canal selon la sous-trame pour renvoyer des informations de canal ;
une unité de détection (1102) configurée pour détecter s'il existe un signal de référence prédéfini dans la sous-trame pour mesurer une qualité de canal ; et
une unité de rétroaction (1103) configurée pour, lorsqu'il est détecté par l'unité de détection (1102) qu'il existe un signal de référence prédéfini dans la sous-trame pour mesurer une qualité de canal, rapporter un résultat de mesure de qualité de canal de la sous-trame pour mesurer une qualité de canal au niveau de la sous-trame pour renvoyer les informations de canal ;
dans lequel l'unité de rétroaction (1103) est configurée pour rapporter le résultat de mesure de qualité de canal via un canal de commande de liaison montante physique, PUCCH, ou un canal partagé de liaison montante physique, PUSCH, d'une cellule primaire connectée à l'UE.

2. Appareil selon la revendication 1, dans lequel l'appareil comprend en outre :
une unité de mesure (1104) configurée pour, lorsqu'il est détecté par l'unité de détection (1102) qu'il existe un signal de référence prédéfini dans la sous-trame pour mesurer une qualité de canal, mesurer une qualité de canal de la sous-trame pour mesurer une qualité de canal.

3. Appareil selon la revendication 1, dans lequel,
l'unité de rétroaction (1103) est configurée pour rapporter un résultat de mesure de qualité de canal précédemment stocké au niveau de la sous-trame renvoyant des informations de canal lorsqu'il est détecté par l'unité de détection (1102) qu'il n'existe pas de signal de référence prédéfini dans la sous-trame pour mesurer une qualité de canal.
